# EUROPÄISCHE PATENTANMELDUNG

(11) **EP 1 187 271 A2**
(43) Veröffentlichungstag der Anmeldung: **13.03.2002**
(21) Anmeldenummer: 01119196.2
(22) Anmeldetag: 09.08.2001
(51) Int. Cl.: H01R 13/68, H01R 4/24

(54) **Vorrichtung zum elektrischen Verbinden einer Datenanschlussleitung mit einer Niederspannungs-Energieversorgungsleitung**

(30) Priorität: 08.09.2000 DE 10044638
(71) Anmelder: Pfisterer Kontaktsysteme GmbH & Co. KG, 73650 Winterbach (DE)
(72) Erfinder: Moser, Bernd, 75245 Neulingen-Bauschlott (DE)
(74) Vertreter: Patentanwälte Bartels und Partner

(57) **Zusammenfassung**

Die Erfindung betrifft eine Vorrichtung zum elektrischen Verbinden eines Leiters (1) einer Datenanschlussleitung (2) mit einem Leiter (3) einer Niederspannungs-Energieversorgungsleitung (4), wobei die Vorrichtung eine Klemmeinrichtung (5, 5', 55, 55') aufweist, die mit dem Leiter (3) der Niederspannungs-Energieversorgungsleitung (4) elektrisch verbindbar ist, und die ein erstes Steckverbindungsmittel zum lösbaren elektrischen Verbinden mit einem an dem Leiter (1) der Datenanschlussleitung (2) angeordneten zweiten Steckverbindungsmittel aufweist.

## Beschreibung

Die Erfindung betrifft eine Vorrichtung zum elektrischen Verbinden eines Leiters einer Datenanschlussleitung mit einem Leiter einer N iederspannungs-Energieversorgungsleitung.

Die DE 299 14 236 U1 zeigt eine Ankoppeleinheit mit integriertem Steckkontaktbereich zur Ankoppelung einer Datenübertragungsvorrichtung an die Phase eines elektrischen Energieübertragungsnetzes, insbesondere eines Mittelspannungsnetzes mit einem Spannungsniveau von beispielsweise 10 kV. Im Gegensatz zur vorliegenden Erfindung erfolgt die Ankopplung kapazitiv und die Anschlußbuchse für die Datenübertragungsleitung ist in jedem Falle spannungsfrei.
Die Ankoppeleinheit weist eine mit einem Stützisolator vergleichbare äußere Form auf.

Die GB 2 343 096 A zeigt eine Verbindungsvorrichtung zum lösbaren Verbinden einer Datenanschlußleitung mit einem Einbausicherungshalter der Energieversorgungsleitung. Auch hier erfolgt eine kapazitive Ankopplung bei gleichzeitiger galvanischer Trennung zwischen Datenanschlußleitung und Energieversorgungsleitung.

Die Nutzung der flächendeckend verlegten und nahezu in jeden Haushalt geführten Energieversorgungsleitungen für die Übertragung von Daten ist seit einigen Jahren Gegenstand zahlreicher technischer Entwicklungen. Neben der Ein- und Auskopplung der Daten, die häufig einen Signalpegel von nur einigen wenigen Volt oder darunter aufweisen, stellt insbesondere die galvanische Verbindung der Datenanschlussleitung mit der Energieversorgungsleitung ein Problem dar. Die mit der Installation von Datennetzen vertrauten Nachrichtenelektriker und -elektroniker sind beim Anschluss der Datenleitung an die Niederspannungs-Energieversorgungsleitung mit ihrem Spannungspegel von 230 V gegen Erde besonders gefährdet. Neben dieser Gefährdung treten bei der Montage häufig niederspannungstypische Erscheinungen wie beispielsweise Spannungsüberschläge und Funkenbildung auf, welche die Datenübertragung negativ beeinflussen.

Der Erfindung liegt das Problem zugrunde, eine Vorrichtung zum elektrischen Verbinden eines Leiters einer Datenanschlussleitung mit einem Leiter einer Niederspannungs-Energieversorgungsleitung bereitzustellen, welche die Nachteile des Standes der Technik überwindet. Insbesondere soll die Vorrichtung eine einfache und gefahrlose Montage und elektrische Verbindung gewährleisten, bei der das Datennetz zuverlässig vor der Niederspannung geschützt ist und die Betriebssicherheit des Energieversorgungsnetzes sowie eine dauerhaft zuverlässige Datenübertragung gewährleistet ist.

Das Problem ist durch die im Anspruch 1 bestimmte Vorrichtung gelöst. Besondere Ausführungsarten der Erfindung sind in den Unteransprüchen bestimmt.

Dadurch, dass die Vorrichtung eine Klemmeinrichtung aufweist, die mit dem Leiter der Niederspannungs-Energieversorgungsleitung elektrisch verbindbar ist, und die ein erstes Steckverbindungsmittel zum lösbaren elektrischen Verbinden mit einem an dem Leiter der Datenanschlussleitung angeordneten zweiten Steckverbindungsmittel aufweist, ist das der Erfindung zugrunde liegende Problem gelöst. Durch die Klemmeinrichtung ist eine einfache Montage gewährleistet und der Monteur zuverlässig gegen die Niederspannung geschützt. Die vorzugsweise lösbare Steckverbindung gewährleistet eine einfache und dauerhaft zuverlässige Datenübertragung zwischen der Datenanschlussleitung und der Energieversorgungsleitung.

Zum Herstellen der Verbindung wird in einem ersten Schritt die Klemmeinrichtung mit dem Leiter der Niederspannungs-Energieversorgungsleitung elektrisch und in der Regel auch mechanisch verbunden und anschließend die Steckverbindungsmittel zusammengesteckt. Die Steckverbindung ist vorzugsweise lösbar. Bei den Daten kann es sich um analoge oder digitale Sprach-, Bild- oder Steuerdaten beispielsweise aus einem Telekommunikationsnetz, einem weltweiten Datennetz oder einem Breitbandkabelnetz für TV und/oder Radio handeln. Die Datenübertragung erfolgt vorzugsweise bidirektional.

Eine erfindungsgemäße Vorrichtung kann beispielsweise in einer Hausanschlussstation eines Haushalts vorgesehen sein, um die Daten aus der Niederspannungs-Energieversorgungsleitung in ein hausinternes Datennetz einzuspeisen. Ebenso kann eine erfindungsgemäße Vorrichtung in einer Ortsnetzstation oder Trafostation eines Energieversorgungsnetzes angeordnet sein, in der beispielsweise eine Mittelspannung von 10 kV auf die haushaltsübliche Niederspannung von 230 V gegen Masse bzw. 380 V zwischen den Phasen heruntertransformiert wird. Erfindungsgemäße Vorrichtungen können jeweils paarweise zur Überbrückung von Trennstellen im Energieversorgungsnetz eingesetzt werden, beispielsweise von Sicherungen sowohl in der Ortsnetzstation als auch in der Hausanschlussstation, um auch bei einem Trennen der Energieversorgungsleitung durch die Sicherung eine ununterbrochene Datenübertragung zu gewährleisten.

Dadurch, dass die Klemmeinrichtung zwei zusammenfügbare Klemmkörper aufweist und dass durch das Zusammenfügen der Klemmkörper die Klemmeinrichtung mit dem Leiter der Niederspannungs-Energieversorgungsleitung elektrisch verbindbar ist, wird beim Zusammenfügen sozusagen automatisch die elektrische Verbindung hergestellt. Dadurch ist die Sicherheit bei der Montage weiter erhöht und eine dauerhaft zuverlässige elektrische Verbindung gewährleistet.

Vorzugsweise ist mindestens ein Klemmkörper bügelförmig und die Klemmkörper nehmen den Leiter der Niederspannungs-Energieversorgungsleitung beim Zusammenfügen zwischen sich auf. Dadurch kann die Klemmeinrichtung in den zu kontaktierenden Leiter einfach eingehängt werden und es kann eine mechanische Vorfixierung erfolgen, ohne dass eine elektrische Kontaktierung des Niederspannung führenden Leiters erfolgt. Mindestens einer der Klemmkörper kann an einem Schaltbrett, einem Anschlusskasten oder dergleichen montierbar sein. Weiter vorzugsweise sind beide Klemmkörper im Wesentlichen bügelförmig ausgebildet und umgreifen den zu kontaktierenden Leiter der Niederspannungs-Energieversorgungsleitung um jeweils etwa 180°.

Dadurch, dass die Klemmkörper mit mindestens zwei Verbindungsschrauben miteinander verschraubbar sind und dass zu beiden Seiten des Leiters der Niederspannungs-Energieversorgungsleitung eine Verbindungsschraube angeordnet ist, sind hohe Klemm- und damit Kontaktkräfte einleitbar und eine dauerhafte elektrische Verbindung gewährleistet. Vorzugsweise sind die Schrauben nicht mit spannungsführenden Teilen in elektrischer Verbindung. Die Klemmkörper bestehen vorzugsweise aus einem elektrisch isolierenden Werkstoff, jedenfalls an ihrer Oberfläche, vorzugsweise aus einem eine ausreichende mechanische Festigkeit und Steifigkeit aufweisenden Kunststoff.

Dadurch, dass mindestens einer der Klemmkörper einen elektrisch leitfähigen Kontaktkörper aufweist, der mit dem Leiter der Niederspannungs-Energieversorgungsleitung elektrisch verbindbar ist und mit dem ersten Steckverbindungsmittel elektrisch verbunden ist, sind die spannungsführende Teile berührungssicher in dem Klemmkörper angeordnet.

Vorzugsweise ist der Kontaktkörper plattenförmig und erstreckt sich im Wesentlichen quer zu dem Leiter der Niederspannungs-Energieversorgungsleitung. Derartige Kontaktkörper sind einfach herzustellen und gewährleisten dauerhaft zuverlässige Kontaktstellen. Weiter vorzugsweise ist der Kontaktkörper U-förmig ausgebildet und weist zwei jeweils plattenförmige und parallel zueinander verlaufende Schenkel auf, die jeweils mit dem Leiter der Niederspannungs-Energieversorgungsleitung verbindbar sind.

Dadurch, dass der Kontaktkörper Schneidmittel zum Durchdringen einer Isolation des Leiters der Niederspannungs-Energieversorgungsleitung beim Zusammenfügen der Klemmkörper aufweist, kann ein Abisolieren des Leiters vor der Montage der Vorrichtung unterbleiben. Die Klemmkörper sind zusammenführbar, ohne dass spannungsführende Teile berührt werden können oder müssen.

Dadurch, dass die Schneidmittel einstückig von dem Kontaktkörper ausgebildet sind, sind sie besonders kostengünstig herstellbar und darüber hinaus entfallen zusätzliche und potentiell störanfällige Kontaktstellen.

Dadurch, dass die Schneidmittel Schneidspitzen und/oder Schneidkanten aufweisen, die elektrisch leitfähig sind und beim Zusammenführen der Klemmkörper die elektrische Verbindung zum Leiter der Niederspannungs-Energieversorgungsleitung herstellen, sind definierte und dauerhaft zuverlässige Kontaktstellen bzw. Kontaktlinien bereitstellbar.

Dadurch, dass mindestens zwei Schneidspitzen und/oder Schneidkanten entlang einer dem Leiter der Niederspannungs-Energieversorgungsleitung nachgebildeten Teilkreislinie hintereinander angeordnet sind, werden bei einfacher Montage zuverlässig mehrere Kontaktstellen bzw. Kontaktlinien bereitgestellt. Außerdem sind dadurch auch verschiedene Leiterdurchmesser zuverlässig kontaktierbar.

Dadurch, dass der Kontaktkörper und das erste Steckverbindungsmittel einstückig ausgebildet sind, sind nicht nur die Herstellkosten reduziert, sondern es entfallen auch zusätzliche und potentiell störanfällige weitere Kontaktstellen.

Dadurch, dass die Klemmeinrichtung ein Dichtmittel aufweist, dass den Kontaktkörper derart umgibt, dass die Verbindungsstelle mit dem Leiter der Niederspannungs-Energieversorgungsleitung mindestens im zusammengefügten Zustand der Klemmkörper gegen das Eindringen von Feuchtigkeit abgedichtet ist, ist eine dauerhafte und zuverlässige elektrische Verbindung gewährleistet. Darüber hinaus ergibt sich dadurch ein zusätzlicher Berührschutz, da an der Oberfläche keine spannungsführenden Feuchtigkeitsfilme auftreten können.

Dadurch, dass das Dichtmittel aus einem weichelastischen und vorzugsweise geschäumten Kunststoff hergestellt ist, lassen sich auf einfache und kostengünstige Weise zuverlässig abdichtende und auch an verschiedene Leitungsdurchmesser sich anpassende Dichtmittel bereitstellen.

Dadurch, dass das Dichtmittel in den Klemmkörper mit eingesetztem Kontaktkörper eingespritzt ist, ergibt sich bei einfacher und kostengünstiger Herstellung eine zuverlässige Abdichtung.

Dadurch, dass das erste Steckverbindungsmittel ein Buchsenelement zur Aufnahme eines Steckerelements des zweiten Steckverbindungsmittels aufweist, ergibt sich eine zuverlässige Verbindung und es können auf einfache Weise definierte Kontaktstellen und/oder Kontaktlinien bereitgestellt werden. Vorzugsweise ist das Buchsenelement durch eine Bohrung in einem zwei Schenkel des Kontaktkörpers verbindenden Verbindungsstück gebildet, in die ein Steckerelement des zweiten Steckverbindungsmittels einführbar ist. Das Verbindungsstück erstreckt sich vorzugsweise parallel zur Längsachse des Leiters der Niederspannungs-Energieversorgungsleitung. Die Achse der Bohrung schließt mit dem Leiter vorzugsweise einen rechten Winkel ein. Die Schenkel und das Verbindungsstück des Kontaktkörpers sind vorzugsweise einstückig ausgebildet.

Dadurch, dass das Buchsenelement mindestens zwei sich im Wesentlichen parallel zu einer Längsachse erstreckende Kontaktzungen oder Kontaktlamellen aufweist, ist eine zuverlässige Kontaktierung des zweiten Steckverbindungsmittels gewährleistet. Zur Erhöhung der Kontaktkraft kann das Buchsenelement ein Fremdfedermittel aufweisen.

Dadurch, dass die Kontaktzungen oder Kontaktlamellen einstückig ausgebildet sind, sind die Herstellungskosten weiter reduziert und es entfallen zusätzliche und potentiell störanfällige weitere Kontaktstellen.

Dadurch, dass das erste Steckverbindungsmittel berührungssicher an der Klemmeinrichtung, insbesondere dem Klemmkörper, angeordnet ist, ist die Sicherheit bei der Montage und auch im Betrieb weiter erhöht. Die Berührungssicherheit muss dabei die jeweils gültigen und gegebenenfalls national unterschiedlichen Sicherheitsanforderungen erfüllen, beispielsweise berührungssicher gegenüber einem so genannten VDE-Finger oder einem VDE-Ballen sein.

Dadurch, dass das erste Steckverbindungsmittel von einer Außenoberfläche der Klemmeinrichtung, insbesondere des Klemmkörpers, zurückversetzt angeordnet ist, ist zum einen die Berührungssicherheit einfach bereitstellbar und zum anderen auch ein Schutz gegen Verunreinigung der Kontaktstellen erreicht.

Dadurch, dass die Datenanschlussleitung an dem von der Klemmeinrichtung abgewandten Ende mechanisch unlösbar an einem eine galvanische Trennung zwischen der Datenanschlussleitung und einer weiterführenden Datenleitung aufweisenden Anschlussmodul festgelegt ist, ist gewährleistet, dass im Falle eines Defekts die niederspannungsführenden Teile nur komplett ausgetauscht werden können. Die weiterführende Datenleitung kann an das Anschlussmodul steckbar anschließbar sein, beispielsweise mittels einer koaxialen BNC-Steckeinrichtung.

Dadurch, dass das zweite Steckverbindungsmittel eine Sicherung aufweist, die bei Überschreitung eines vorgebbaren Stromwertes die elektrische Verbindung zwischen dem Leiter der Niederspannungs-Energieversorgungsleitung und dem Leiter der Datenanschlussleitung unterbricht, ist die Sicherheit und Zuverlässigkeit der Vorrichtung weiter erhöht.

Dadurch, dass die Sicherung eine Schmelzsicherung ist, ist ein zuverlässiges und schnelles Ansprechen der Sicherung gewährleistet.

Dadurch, dass das zweite Steckverbindungsmittel ein Gehäuse aufweist, in dem die Sicherung angeordnet ist, und ein als Steckerelement ausgebildetes Kontaktorgan aufweist, ist eine kostengünstige und kompakte Herstellung bzw. Ausführung gewährleistet. Vorzugsweise ist das Gehäuse an das Ende der Datenanschlussleitung angespritzt und dichtet dadurch die Sicherung sowie die weiteren spannungsführenden Teile zuverlässig nach außen ab.

Dadurch, dass das Steckerelement aus mindestens einem Blechstreifen geformt ist und im Inneren des Gehäuses einstückig eine Kontaktstelle für die Sicherung aufweist, ist eine zuverlässige Verbindung gewährleistet, wobei durch die geometrische Ausgestaltung der Blechstreifen definierte Kontaktstellen oder Kontaktlinien bereitgestellt werden können. Außerdem entfallen dadurch weitere und potentiell störanfällige Kontaktstellen.

Weitere Vorteile, Merkmale und Einzelheiten der Erfindung ergeben sich aus den Unteransprüchen sowie der nachfolgenden Beschreibung, in der unter Bezugnahme auf die Zeichnungen ein Ausführungsbeispiel im Einzelnen beschrieben ist. Dabei können die in den Ansprüchen und in der Beschreibung erwähnten Merkmale jeweils einzeln für sich oder in beliebiger Kombination erfindungswesentlich sein.
- Fig. 1: zeigt eine erfindungsgemäße Vorrichtung,
- Fig. 2: zeigt einen Schnitt durch die Klemmeinrichtung der Fig. 1 entlang II-II und
- Fig. 3: zeigt eine Anordnung der erfindungsgemäße Vorrichtung in einem Energieversorgungsnetz.

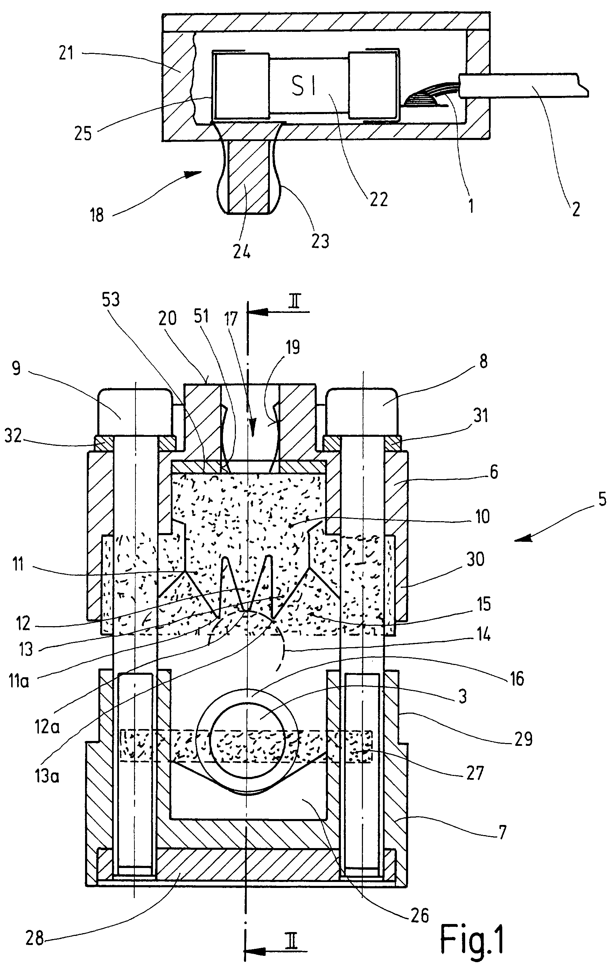

Die Fig. 1 zeigt eine erfindungsgemäße Vorrichtung teilweise im Querschnitt und teilweise in der Ansicht. Die Vorrichtung zum elektrischen Verbinden eines Leiters 1 einer Datenanschlussleitung 2 mit einem Leiter 3 einer Niederspannungs-Energieversorgungsleitung 4 weist eine Klemmeinrichtung 5 auf, die mit dem Leiter 3 der Niederspannungs-Energieversorgungsleitung 4 elektrisch verbindbar ist und die ein erstes Steckverbindungsmittel zum lösbaren Verbinden mit einem an dem Leiter 1 der Datenanschlussleitung 2 angeordneten zweiten Steckverbindungsmittel aufweist. Die Klemmeinrichtung 5 weist zwei zusammenfügbare Klemmkörper 6, 7 auf, wobei durch das Zusammenfügen der Klemmkörper 6, 7 die Klemmeinrichtung 5 mit dem Leiter 3 der Niederspannungs-Energieversorgungsleitung 4 elektrisch verbindbar ist. Die beiden Klemmkörper 6, 7 sind jeweils im Wesentlichen bügelförmig und nehmen den Leiter 3 der Niederspannungs-Energieversorgungsleitung 4 zwischen sich auf. Die beiden Klemmkörper 6, 7 sind mit zwei Verbindungsschrauben 8, 9 miteinander verschraubbar, die auf gegenüberliegenden Seiten des Leiters 3 der Niederspannungs-Energieversorgungsleitung 4 angeordnet sind.

Die beiden Klemmkörper 6, 7 sind aus einem elektrisch isolierenden und eine ausreichende mechanische Steifigkeit aufweisenden Kunststoff hergestellt. Der erste Klemmkörper 6 weist einen elektrisch leitfähigen Kontaktkörper 10 auf, dessen in der Fig. 1 dargestellter Schenkel 34 plattenförmig ist und sich im Wesentlichen quer zu dem Leiter 3 der Niederspannungs-Energieversorgungsleitung 4 und damit in etwa parallel zur Zeichenebene der Fig. 1 erstreckt. Der Kontaktkörper 10 bildet einstückig drei Schneid-/Kontaktzähne 11, 12, 13 aus, die an ihrem dem Leiter 3 zugewandten Ende jeweils eine senkrecht zur Zeichenebene der Fig. 1 sich erstreckende Schneidkante 11a, 12a, 13a ausbilden.
Die Schnittpunkte der Schneidkanten 11a, 12a, 13a mit der Zeichenebene der Fig. 1 liegen auf einer dem zu kontaktierenden Leiter 3 der Niederspannungs-Energieversorgungsleitung 4 nachgebildeten Teilkreislinie 14.

In den ersten Kontaktkörper 6 ist ein Dichtmittel 15 aus einem weichelastischen und vorzugsweise geschäumten Kunststoff als Formteil eingelegt oder bei eingesetztem Kontaktkörper 10 eingespritzt.
Das Dichtmittel 15 umgibt den Kontaktkörper 10 jedenfalls im zusammengefügten Zustand der Klemmkörper 6, 7 derart, dass ein Eindringen von Feuchtigkeit an die Kontaktstelle zwischen Klemmkörper 10 und dem Leiter 3 zuverlässig verhindert ist.

Beim Zusammenfügen der Klemmkörper 6, 7 durchdringt der Kontaktkörper 10 mit seinen Schneid-/Kontaktzähnen 11, 12, 13 zunächst das Dichtmittel 15, um beim weiteren Zusammenfügen mit seinen Schneidkanten 11a, 12a, 13a die Isolation 16 der N iederspannungs-Energieversorgungsleitung 4 zu durchdringen und den Leiter 3 elektrisch zu kontaktieren.

Das Steckverbindungsmittel weist ein Buchsenelement 17 auf, zur Aufnahme eines Steckerelements 18 des zweiten Steckverbindungsmittels. Das Buchsenelement 17 weist hierzu mindestens zwei sich im Wesentlichen parallel zu einer Längsachse des Buchsenelements 17 sich erstreckende Kontaktzungen 19 auf. Diese sind einstückig vom Kontaktkörper 10 ausgebildet und berührungssicher von der Außenoberfläche 20 des ersten Klemmkörpers 6 zurückversetzt angeordnet. Alternativ zur Ausbildung der Kontaktzungen 19 kann als Buchsenelement lediglich eine Bohrung 51 in dem zwei Schenkel 33, 34 miteinander verbindenden Verbindungsstück 53 des Kontaktkörpers 10 ausgebildet sein. Durch die Form des als Steckerelement 18 ausgebildeten zweiten Steckverbindungsmittels erfolgt beim Einstecken in die Kontaktzungen 19 bzw. in die Bohrung 51 ein Verrasten der ersten und zweiten Steckverbindungsmittel miteinander. Die Öffnung im ersten Klemmkörper 6 ist durch einen in den Figuren nicht dargestellten und vorzugsweise von dem ersten Klemmkörper 6 einstückig ausgebildeten, beispielsweise an diesen angespritzten, Verschlussstopfen verschließbar. Dadurch ist ein Eindringen von Verunreinigungen und/oder Feuchtigkeit in das Buchsenelement 17 zuverlässig verhinderbar.

Das zweite Steckverbindungsmittel weist ein Gehäuse 21 auf, in dem eine Schmelzsicherung 22 angeordnet ist. Das Steckerelement 18 ist aus mindestens einem Blechstreifen 23 um einen zylindrischen Stabilisierungsstift 24 herum geformt, wobei der Blechstreifen 23 im Inneren des Gehäuses einstückig eine Kontaktstelle 25 für die Schmelzsicherung 22 ausbildet. Am gegenüberliegenden Ende ist an der Schmelzsicherung 22 der Leiter 1 der Datenanschlussleitung 2 angelötet oder angeschweißt. Sofern das Gehäuse 21 wie im dargestellten Ausführungsbeispiel zweistückig ausgebildet ist, kann für die elektrische Kontaktierung der Schmelzsicherung 22 auch eine handelsübliche Sicherungshalterung verwendet werden. Alternativ zu der zweistückigen Ausbildung des Gehäuses 21 kann dieses auch durch Umspritzen der Schmelzsicherung 22 ausgebildet sein.

In dem zweiten Kontaktkörper 7 ist eine im Querschnitt V-förmige und einen stumpfen Winkel einschließende Auflage 26 für den Leiter 3 der Niederspannungs-Energieversorgungsleitung 4 bzw. dessen Isolation 16 eingelegt oder von dem zweiten Kontaktkörper 7 einstückig ausgebildet. Vorzugsweise ist in dem zweiten Kontaktkörper 7 außerdem ein weiteres Dichtmittel 27 eingelegt, das in der Fig. 1 im unverformten Zustand dargestellt ist, d. h. in dem Zustand ohne eingelegten Leiter 3. Sowohl der erste als auch der zweite Klemmkörper 6, 7 weisen Durchgangsöffnungen für die Verbindungsschrauben 8, 9 auf. In den zweiten Klemmkörper 7 ist auf der Unterseite eine Gegenplatte 28 eingelegt, die Gewindebohrungen für die Aufnahme der Schrauben 8, 9 aufweist. Auf der Umfangsseite weist der zweite Klemmkörper 7 einen vorzugsweise durchgehenden stufenförmigen Absatz 29 auf, über dem beim Zusammenfügen der beiden Klemmkörper 6, 7 eine von dem ersten Klemmkörper 6 einstückig ausgebildete Auskragung 30 übergreift. Dadurch ist die Dichtwirkung im zusammengefügten Zustand weiter erhöht. Unter den einen Innensechskant aufweisenden Schraubenkopf der Verbindungsschrauben 8, 9 ist jeweils eine Unterlegscheibe 31, 32 unterlegt, die auch eine Sicherungsfunktion im zusammengefügten Zustand der Klemmkörper 6, 7 bereitgestellt.

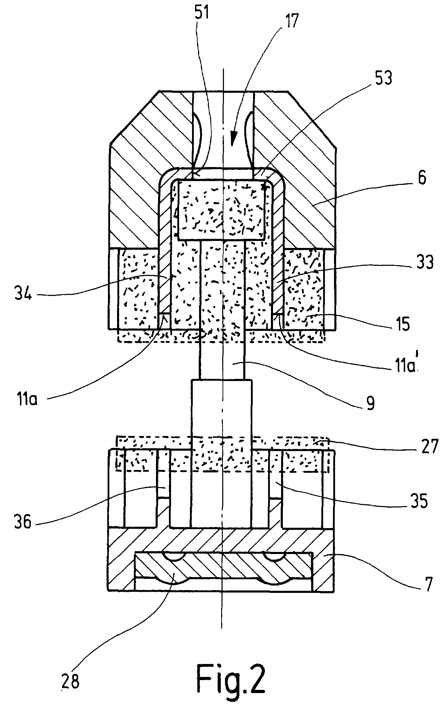

Die Fig. 2 zeigt einen Schnitt durch die Klemmeinrichtung 5 der Fig. 1 entlang II-II. Aus Gründen der Übersichtlichkeit ist die Verbindungsschraube 9 in ihrer den zusammengefügten Zustand der beiden Klemmkörper 6, 7 entsprechenden Stellung dargestellt. Die Fig. 2 zeigt demgegenüber die Stellung der beiden Klemmkörper 6, 7, in der der zu kontaktierende Leiter 3 der Niederspannungs-Energieversorgungsleitung 4 zwischen die Klemmkörper 6, 7 einlegbar ist. Hierzu kann im Fall eines durchgehenden Leiters 3 die in der Fig. 2 nicht dargestellte erste Verbindungsschraube 8 aus der Klemmplatte 28 herausgeschraubt und aus dem zweiten Klemmkörper 7 herausgezogen werden.

Der Kontaktkörper 10 ist im dargestellten im Schnitt U-förmig und bildet einstückig zwei in Längsrichtung des zu kontaktierenden Leiters 3 der Niederspannungs-Energieversorgungsleitung 4 parallel versetzt angeordnete Schneid-/Kontaktzähne 11, 12, 13 aus. Durch die dadurch gebildeten und in Längsrichtung des Leiters 3 parallel versetzten Schneidkanten 11a, 11a' wird der Leiter 3 an zwei axial beabstandeten Stellen sicher kontaktiert. Für die beiden plattenförmigen Schenkel 33, 34 des Kontaktkörpers 10 sind im zweiten Klemmkörper 7 entsprechende Einführnuten 35, 36 vorgesehen. Dadurch ist eine Führung der Schenkel 33, 34 gewährleistet und ein unzulässiges Verformen des Kontaktkörpers 10 zuverlässig verhindert.

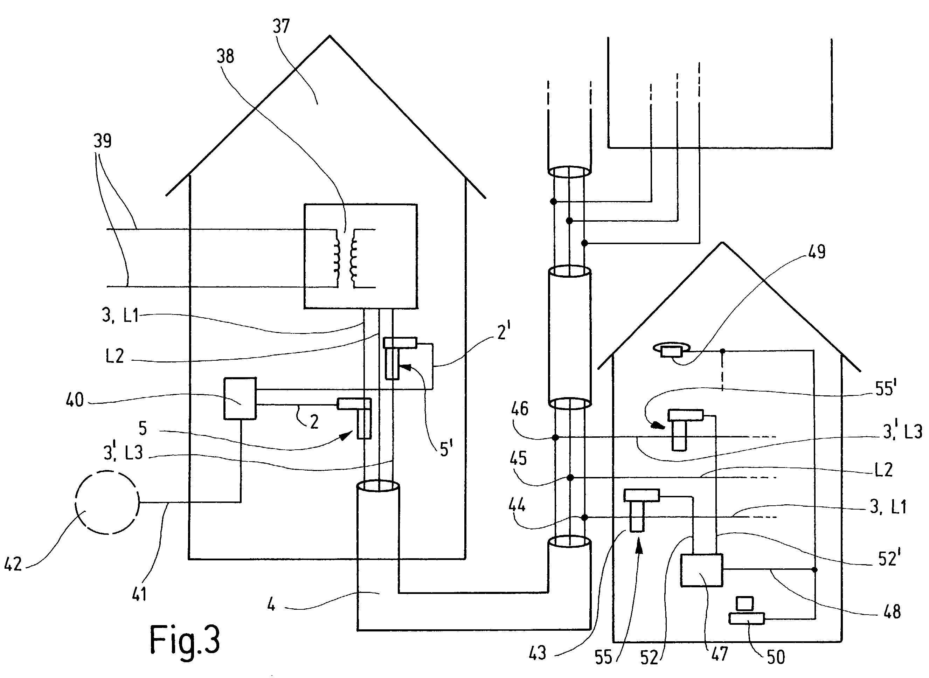

Die Fig. 3 zeigt eine Anordnung von mehreren erfindungsgemäßen Vorrichtungen in einem Energieversorgungssystem. In einer Trafostation 37 wird mittels eines Transformators 38 die über eine Mittelspannungsleitung 39 zugeführte Mittelspannung auf Niederspannung heruntertransformiert. In üblicher Weise werden drei Phasen L1, L2, L3 auf der Niederspannungsseite bereitgestellt. Die Spannung zwischen den Phasen L1, L2, L3 beträgt jeweils 380° und die Spannung zwischen jeder Phase L1, L2, L3 gegen Erde beträgt 230 V.

An den Leiter 3 der Phase L1 der Niederspannungs-Energieversorgungsleitung 4 ist die Klemmeinrichtung 5 geklemmt. In entsprechender Weise ist eine Klemmeinrichtung 5' an den Leiter 3' der Phase L3 geklemmt. Die beiden zugehörigen Datenanschlussleitungen 2, 2' sind zu einem Anschlussmodul 40 geführt und an diesem mechanisch unlösbar festgelegt, das eine galvanische Trennung zwischen den Datenanschlussleitungen 2, 2' und damit dem Spannungspegel der Niederspannungs-Energieversorgungsleitung 4 und einer weiterführenden Datenleitung 41 bereitstellt. Über die Datenleitung 41 ist die Verbindung zum weiterführenden Datennetz hergestellt, beispielsweise zum Datennetz der Deutschen Telekom oder eines weltweiten Datennetzes 42.

Über die Niederspannungs-Energieversorgungsleitung 4 können beispielsweise mittels Erdkabel die Daten zu den einzelnen Haushalten übertragen werden. In einer Hausanschlussstation 43, die über konventionelle Abzweigklemmen 44, 45, 46 an die Niederspannungs-Energieversorgungsleitung 4 angeschlossen ist, werden die Leiter 3, 3' mittels Klemmeinrichtungen 55, 55' elektrisch kontaktiert und erfindungsgemäß mit Datenanschlussleitungen 52, 52' verbunden, die mechanisch unlösbar mit einem weiteren Anschlussmodul 47 angeschlossen sind. Das weitere Anschlussmodul 47 stellt die Datenverbindung zu dem hausinternen Datennetz 48 bereit, an das beispielsweise ein Telefon 49, ein Personal Computer 50 oder ein Radio/TV-Gerät anschließbar ist. Alle Klemmeinrichtungen 5, 5', 55, 55' sind vorzugsweise identisch aufgebaut.

## Patentansprüche

1. Vorrichtung zum elektrischen Verbinden eines Leiters (1) einer Datenanschlussleitung (2) mit einem Leiter (3) einer Niederspannungs-Energieversorgungsleitung (4), wobei die Vorrichtung eine Klemmeinrichtung (5, 5', 55, 55') aufweist, die mit dem Leiter (3) der Niederspannungs-Energieversorgungsleitung (4) elektrisch verbindbar ist, und die ein erstes Steckverbindungsmittel zum lösbaren elektrischen Verbinden mit einem an dem Leiter (1) der Datenanschlussleitung (2) angeordneten zweiten Steckverbindungsmittel aufweist.

2. Vorrichtung nach Anspruch 1, **dadurch gekennzeichnet, dass**
die Klemmeinrichtung (5, 5', 55, 55') zwei zusammenfügbare Klemmkörper (6, 7) aufweist und dass durch das Zusammenfügen der Klemmkörper (6, 7) die Klemmeinrichtung (5, 5', 55, 55') mit dem Leiter (3) der Niederspannungs-Energieversorgungsleitung (4) elektrisch verbindbar ist.

3. Vorrichtung nach Anspruch 2, **dadurch gekennzeichnet, dass** mindestens ein Klemmkörper (6, 7) bügelförmig ist und dass beim Zusammenfügen die Klemmkörper (6, 7) den Leiter (3) der Niederspannungs-Energieversorgungsleitung (4) zwischen sich aufnehmen.

4. Vorrichtung nach Anspruch 3, **dadurch gekennzeichnet, dass**
die Klemmkörper (6, 7) mit mindestens zwei Verbindungsschrauben (8, 9) miteinander verschraubbar sind und dass zu beiden Seiten des Leiters (3) der Niederspannungs-Energieversorgungsleitung (4) eine Verbindungsschraube (8, 9) angeordnet ist.

5. Vorrichtung nach einem der Ansprüche 2 bis 4, **dadurch gekennzeichnet, dass** mindestens einer der Klemmkörper (6, 7) einen elektrisch leitfähigen Kontaktkörper (10) aufweist, der mit dem Leiter (3) der Niederspannungs-Energieversorgungsleitung (4) elektrisch verbindbar ist und mit dem ersten Steckverbindungsmittel elektrisch verbunden ist.

6. Vorrichtung nach Anspruch 5, **dadurch gekennzeichnet, dass** der Kontaktkörper (10) plattenförmig ist und sich im wesentlichen quer zu dem Leiter (3) der Niederspannungs-Energieversorgungsleitung (4) erstreckt.

7. Vorrichtung nach Anspruch 5 oder 6, **dadurch gekennzeichnet, dass** der Kontaktkörper (10) Schneidmittel (11, 12, 13) zum Durchdringen einer Isolation (16) des Leiters (3) der Niederspannungs-Energieversorgungsleitung (4) beim Zusammenfügen der Klemmkörper (6, 7) aufweist.

8. Vorrichtung nach Anspruch 7, **dadurch gekennzeichnet, dass**
die Schneidmittel (11, 12, 13) einstückig von dem Kontaktkörper (10) ausgebildet sind.

9. Vorrichtung nach Anspruch 7 oder 8, **dadurch gekennzeichnet, dass** die Schneidmittel (11, 12, 13) Schneidspitzen und/oder Schneidkanten (11a, 11a', 12a, 13a) aufweisen, die elektrisch leitfähig sind und beim Zusammenführen der Klemmkörper (6, 7)
die elektrische Verbindung zum Leiter (3) der Niederspannungs-Energieversorgungsleitung (4) herstellen.

10. Vorrichtung nach einem der Ansprüche 7 bis 9, **dadurch gekennzeichnet, dass** mindestens zwei Schneidspitzen und/oder Schneidkanten (11a, 11a', 12a, 13a) entlang einer dem Leiter (3) der Niederspannungs-Energieversorgungsleitung (4) nachgebildeten Teilkreislinie (14) hintereinander angeordnet sind.

11. Vorrichtung nach einem der Ansprüche 5 bis 10, **dadurch gekennzeichnet, dass** der Kontaktkörper (10) und das erste Steckverbindungsmittel einstückig ausgebildet sind.

12. Vorrichtung nach einem der Ansprüche 5 bis 11, **dadurch gekennzeichnet, dass** die Klemmeinrichtung ein Dichtmittel (15) aufweist, das den Kontaktkörper (10) derart umgibt, dass
die Verbindungsstelle mit dem Leiter (3) der Niederspannungs-Energieversorgungsleitung (4) mindestens im zusammengefügten Zustand der Klemmkörper (6, 7) gegen das Eindringen von Feuchtigkeit abgedichtet ist.

13. Vorrichtung nach Anspruch 12, **dadurch gekennzeichnet, dass**
das Dichtmittel (15) aus einem weichelastischen und vorzugsweise geschäumten Kunststoff hergestellt ist.

14. Vorrichtung nach Anspruch 12 oder 13, **dadurch gekennzeichnet, dass** das Dichtmittel (15) in den Klemmkörper (6, 7) mit eingesetztem Kontaktkörper (10) eingespritzt ist.

15. Vorrichtung nach einem der Ansprüche 1 bis 14, **dadurch gekennzeichnet, dass** das erste Steckverbindungsmittel ein Buchsenelement (17) zur Aufnahme eines Steckerelements (18) des zweiten Steckverbindungsmittels aufweist.

16. Vorrichtung nach Anspruch 15, **dadurch gekennzeichnet, dass**
das Buchsenelement (17) mindestens zwei sich im Wesentlichen parallel zu einer Längsachse erstreckende Kontaktzungen (19) oder Kontaktlamellen aufweist.

17. Vorrichtung nach Anspruch 16, **dadurch gekennzeichnet, dass**
die Kontaktzungen (19) oder Kontaktlamellen einstückig ausgebildet sind.

18. Vorrichtung nach einem der Ansprüche 1 bis 17, **dadurch gekennzeichnet, dass** das erste Steckverbindungsmittel berührungssicher an der Klemmeinrichtung (5, 5', 55, 55'), insbesondere dem Klemmkörper (6, 7), angeordnet ist.

19. Vorrichtung nach einem der Ansprüche 1 bis 18, **dadurch gekennzeichnet, dass** das erste Steckverbindungsmittel von einer Außenoberfläche (20) der Klemmeinrichtung (5, 5', 55, 55'), insbesondere des Klemmkörpers (6, 7), zurückversetzt angeordnet ist.

20. Vorrichtung nach einem der Ansprüche 1 bis 19, **dadurch gekennzeichnet, dass** die Datenanschlussleitung (2) an dem von der Klemmeinrichtung (5, 5', 55, 55') abgewandten Ende mechanisch unlösbar an einem eine galvanische Trennung zwischen der Datenanschlussleitung (2) und einer weiterführenden Datenleitung (41) aufweisenden Anschlussmodul (40) festgelegt ist.

21. Vorrichtung nach einem der Ansprüche 1 bis 20, **dadurch gekennzeichnet, dass** das zweite Steckverbindungsmittel eine Sicherung aufweist, die bei Überschreitung eines vorgebbaren Stromwertes die elektrische Verbindung zwischen dem Leiter (3) der Niederspannungs-Energieversorgungsleitung (4) und dem Leiter (1) der Datenanschlussleitung (2) unterbricht.

22. Vorrichtung nach Anspruch 21, **dadurch gekennzeichnet, dass**
die Sicherung eine Schmelzsicherung (22) ist.

23. Vorrichtung nach Anspruch 21 oder 22, **dadurch gekennzeichnet, dass** das zweite Steckverbindungsmittel ein Gehäuse (21) aufweist, in dem die Sicherung angeordnet ist, und ein als Steckerelement (18) ausgebildetes Kontaktorgan aufweist.

24. Vorrichtung nach Anspruch 23, **dadurch gekennzeichnet, dass**
das Steckerelement (18) aus mindestens einem Blechstreifen (23) geformt ist und im Innern des Gehäuses (21) einstückig eine Kontaktstelle (25) für die Sicherung aufweist.
